# EUROPÄISCHE PATENTSCHRIFT

(11) **EP 3 560 817 B1**
(45) Veröffentlichungstag und Bekanntmachung des Hinweises auf die Patenterteilung: **17.02.2021**
(21) Anmeldenummer: 19170341.2
(22) Anmeldetag: 18.04.2019
(51) Int. Cl.: B64C 1/36, H01Q 1/28, H01Q 1/12

(54) **ANTENNENANORDNUNG FÜR EIN FLUGZEUG**
ANTENNA ASSEMBLY FOR AN AIRCRAFT
AGENCEMENT D'ANTENNE POUR UN AVION

(30) Priorität: 23.04.2018 DE 102018109723
(43) Veröffentlichungstag der Anmeldung: 30.10.2019
(73) Patentinhaber: Airbus Operations GmbH, 21129 Hamburg (DE)
(72) Erfinder: Plokker, Matthijs, 21129 Hamburg (DE); Banavas, Alexander, 21129 Hamburg (DE); Jürgens, Uwe Meno, 21129 Hamburg (DE); Nakarikanti, Saradhi, 21129 Hamburg (DE)
(74) Vertreter: Klöpper, Ute

(56) Entgegenhaltungen:
- EP-A2- 3 133 694
- CN-U- 204 696 229
- US-A1- 2017 050 717
- US-A1- 2017 373 383

## Beschreibung

Die vorliegende Anmeldung betrifft eine Antennenanordnung für ein Flugzeug oder eines Flugzeugs gemäß dem Oberbegriff des Anspruchs 1.

Flugzeuge weisen typischerweise eine oder mehrere Antennen auf, über die eine Funkverbindung zwischen dem Flugzeug und externen Vorrichtungen oder Teilnehmern am Boden oder in der Luft, wie zum Beispiel anderen Flugzeugen oder Satelliten, hergestellt werden kann.

Im Stand der Technik sind solche Antennen unter anderem außen am Flugzeugrumpf montiert worden, so dass sie nach außen vom Flugzeugrumpf in die diese umgebende Luft vorstehen. Dadurch erhöht sich zum einen der Luftwiderstand des Flugzeugs, was den Kraftstoffverbrauch im Betrieb erhöht, und zum anderen müssen für jeden Flugzeugtyp, für jede Antenne und jede Positionierung der Antenne die an den Außenflächen der Antenne auftretenden aerodynamischen Druck- und Sogkräfte, die auch als Aerolasten bezeichnet werden, neu berechnet werden, so dass sich ein hoher Berechnungs- und Zertifizierungsaufwand ergibt. Zudem wurden manche Antennenelemente über eine Basisplatte an dem Rumpf befestigt, die ein relativ hohes Gewicht aufweist und zusammen mit dem eigentlichen Antennenelement in die Umgebungsluft vorsteht.

Die CN 204 696 229 U, von der die vorliegende Erfindung ausgeht, beschreibt eine Antennenanordnung für ein Flugzeug, die in einer Öffnung in der Außenhaut vorgesehen ist, die wiederum an einem Strukturabschnitt vorgesehen ist. Dabei ist ein Strukturelement im Bereich der Öffnung vorgesehen, das mit Längsversteifungselementen des Strukturabschnitts verbunden ist.

Aus der EP 3 133 694 A2 ist eine Antennenanordnung für einen Flugzeugrumpf bekannt, die in einen Rahmen eingesetzt ist, der wiederum mit einem Strukturabschnitt des Flugzeugrumpfs verbunden ist. Die Antennenabschnitte der Antennenanordnung sind von separaten Abdeckungen abgedeckt.

In anderen Ausgestaltungen wurden Antennenelemente solcher Antennen direkt in die Außenhaut des Flugzeugrumpfes integriert, indem sie als eine Schicht einer mehrschichtigen Außenhaut vorgesehen wurden. Bei derartigen Antennen sind jedoch Wartungsarbeiten und ein späterer Austausch nach der Fertigung aufwändig, und außerdem können ihre Sende- und Empfangseigenschaften bei einer im Betrieb des Flugzeugs auftretenden Verformung des Rumpfes bzw. der Außenhaut beeinträchtigt werden.

Es ist daher eine Aufgabe der vorliegenden Erfindung, eine Antennenanordnung für ein Flugzeug, die einfach und kostengünstig aufgebaut ist, einen geringen Luftwiderstand des Flugzeugs ermöglicht, leicht zu installieren und zu warten ist und ein geringes Gewicht hat, sowie ein Flugzeug mit einer solchen Antennenanordnung bereitzustellen.

Diese Aufgabe wird durch eine Antennenanordnung für ein Flugzeug mit den Merkmalen des Anspruchs 1 und durch ein Flugzeug mit den Merkmalen des Anspruchs 11 erfüllt. Vorteilhafte Ausführungsformen der Antennenanordnung sind Gegenstand der jeweiligen abhängigen Ansprüche.

Nach der vorliegenden Erfindung ist eine Antennenanordnung für ein Flugzeug oder eines Flugzeugs vorgesehen, die einen Strukturabschnitt eines bzw. des Flugzeugs - bzw. genauer einen Strukturabschnitt einer Struktur oder Teilstruktur des Flugzeugs -, ein Antennenelement, eine für Funkwellen durchlässige Abdeckung und ein, bevorzugt starres bzw. steifes, Strukturelement aufweist.

Der Strukturabschnitt, der zum Beispiel ein Rumpfstrukturabschnitt des Flugzeugs bzw. einer Rumpfstruktur des Rumpfes des Flugzeugs oder ein Strukturabschnitt einer Seitenleitwerkstruktur eines Seitenleitwerks oder einer Tragflächenstruktur einer Tragfläche des Flugzeugs sein kann, weist eine Anordnung von untereinander verbundenen länglichen Längs- und Querversteifungselementen. Die Anordnung von untereinander verbundenen länglichen Längs- und Querversteifungselementen weist ein längliches Längsversteifungselement oder bevorzugt mehrere, dann bevorzugt parallel zueinander verlaufende längliche Längsversteifungselemente und ein längliches Querversteifungselement oder bevorzugt mehrere, dann bevorzugt parallel zueinander verlaufende längliche Querversteifungselemente auf. Das Längsversteifungselemente bzw. die Längsversteifungselemente verläuft bzw. verlaufen in einem Winkel zu dem Querversteifungselement bzw. den Querversteifungselementen, wobei sich die Längsversteifungselemente im in ein Flugzeug eingebauten Zustand des Strukturabschnitts bevorzugt in Längsrichtung des Flugzeugrumpfes erstrecken und sich die Querversteifungselemente im in ein Flugzeug eingebauten Zustand des Strukturabschnitts bevorzugt in Umfangsrichtung des Flugzeugrumpfes erstrecken. Die Längsversteifungselemente werden auch als Stringer bezeichnet und die Querversteifungselemente als Spanten. Die Längs- und Querversteifungselemente sind bevorzugt gitterförmig untereinander verbunden, so dass sie insgesamt eine Gitteranordnung bilden.

Der Strukturabschnitt weist außerdem eine Außenhaut auf, die auf einer Seite der Anordnung von Längs- und Querversteifungselementen - bzw. auf einer Seite der entsprechenden Gitteranordnung - angeordnet und an den Längs- und Querversteifungselementen befestigt ist. Diese Befestigung kann unmittelbar ohne weitere Elemente zwischen der Außenhaut und dem jeweiligen Längs- bzw. Querversteifungselement oder indirekt über Zwischenelemente erfolgen und kann für verschiedene der Längs- und Querversteifungselement unterschiedlich sein. Beispielsweise kann vorgesehen sein, dass die Außenhaut unmittelbar auf den Längsversteifungselementen aufliegt und unmittelbar an diesen befestigt ist, dass aber zwischen den Querversteifungselementen und der Außenhaut Clips angeordnet sind, über die die Außenhaut an den Querversteifungselementen befestigt ist. In jedem Fall bildet eine von den Längs- und Querversteifungselementen bzw. der Anordnung von Längs- und Querversteifungselementen weg weisende ausgedehnte Fläche der Außenhaut eine Außenfläche bzw. Außenseite des Strukturabschnitts und, im in ein Flugzeug eingebauten Zustand des Strukturabschnitts, des gesamten Flugzeugs. Mit anderen Worten ist die Außenhaut in der Weise an den Längs- und Querversteifungselementen angeordnet und befestigt, dass eine erste Fläche der Außenhaut der Anordnung von Längs- und Querversteifungselementen zugewandt ist und eine zweite, der ersten Fläche gegenüberliegende Fläche der Außenhaut eine Außenfläche bzw. Außenseite des Strukturabschnitts bildet, die im in ein Flugzeug eingebauten Zustand des Strukturabschnitts der Umgebung des Flugzeugs zugewandt ist.

Das Antennenelement kann ein einzelnes einstückiges Antennenelement sein oder eine Anordnung von mehreren separaten Antennenelementen aufweisen, die zusammenwirken, um Funkwellen abzustrahlen und/oder zu empfangen.

Die Abdeckung ist für von dem Antennenelement im Betrieb abgestrahlte Funkwellen und durch das Antennenelement empfangbare bzw. zu empfangende Funkwellen durchlässig.

In der Außenhaut ist eine Öffnung bzw. Durchgangsöffnung ausgebildet, die beispielsweise eine kreisförmige, ovale, runde, mehreckige, rechteckige oder quadratische Form haben kann. Die Öffnung wird von der Abdeckung verschlossen, d.h. die Abdeckung ist so angeordnet, dass sie die Öffnung teilweise oder vollständig ausfüllt oder vollständig überdeckt. Im letzteren Fall ist zu beachten, dass es bevorzugt ist, wenn die Abdeckung auf der Seite der Außenhaut angeordnet ist, die der Anordnung von Längs- und Querversteifungselementen gegenüberliegt, d.h. auf der Außenfläche der Außenhaut. Es ist aber auch möglich, die Abdeckung auf der gegenüberliegenden Seite der Außenhaut anzuordnen. Ferner ist unabhängig davon zu beachten, dass bei einer Anordnung, in der die Abdeckung die Öffnung nur teilweise ausfüllt, die Öffnung durch die Abdeckung in Kombination mit einem oder mehreren weiteren Elementen verschlossen werden kann, zum Beispiel durch einen oder mehrere Abschnitte des Strukturelements. Im Bereich der Öffnung weist in jedem Fall mindestens eines der Längsversteifungselemente und/oder mindestens eines der Querversteifungselemente eine Unterbrechung auf, in der das Strukturelement angeordnet ist und die das jeweilige Längs- bzw. Querversteifungselement in zwei Abschnitte auf gegenüberliegenden Seiten der Unterbrechung unterteilt. Mit anderen Worten erstreckt sich jede solche Unterbrechung vollständig oder teilweise unter der Öffnung, wenn man die Außenfläche des Strukturabschnitts als nach oben weisend definiert bzw. in der Weise senkrecht auf die Öffnung blickt, dass sich die Außenhaut zwischen dem Betrachter und der Anordnung von Längs- und Querversteifungselementen befindet. Alle solche Unterbrechungen zusammen bilden eine zusammenhängende Unterbrechung bzw. Aussparung in der Anordnung von Längs- und Querversteifungselementen, d.h. insbesondere in der entsprechenden Gitteranordnung. Eine zusammenhängende Unterbrechung bzw. Aussparung in einer Gitteranordnung ist dabei als ein Bereich definiert, durch den keines der Längs- und Querversteifungselemente verläuft und der größer als die normalen Zwischenräume zwischen benachbarten Längs- und Querversteifungselementen ist, d.h. als die "Zellen" der entsprechenden Gitteranordnung.

Die beiden Abschnitte von jedem der Längs- und Querversteifungselemente, das eine der Unterbrechungen aufweist, sind in der Weise, bevorzugt starr, mit dem Strukturelement verbunden bzw. an diesem befestigt, dass in Längsrichtung des jeweiligen Längs- bzw. Querversteifungselements wirkende Zug- und Druckkräfte, in Querrichtung des jeweiligen Längs- bzw. Querversteifungselements wirkende Scherkräfte und in dem jeweiligen Längs- bzw. Querversteifungselement - und zum Beispiel insbesondere um dessen starke Achse - wirkende Biegemomente durch das Strukturelement zwischen den beiden Abschnitten übertragen werden. Mit anderen Worten liegen sich zwei Enden des jeweiligen Längs- bzw. Querversteifungselements auf gegenüberliegenden Seiten der Unterbrechung gegenüber, d.h. sie begrenzen oder definieren die Unterbrechung, wobei die beiden Enden von jedem der Längs- und Querversteifungselemente, das eine der Unterbrechungen aufweist, in der Weise, bevorzugt starr, mit dem Strukturelement verbunden sind, dass die beschrieben Kraftübertragung stattfinden kann. In diesem Zusammenhang ist zu beachten, dass es in Abhängigkeit von der Ausrichtung und Ausgestaltung der Längs- und Querversteifungselemente im in ein Flugzeug eingebauten Zustand im Betrieb nicht alle der erwähnten Kräfte und Momente auftreten oder zumindest nicht bei allen der Längs- und Querversteifungselemente auftreten. Sind die Längsversteifungselemente als Stringer ausgebildet und die Querversteifungselemente als Spanten, so treten zum Beispiel im Betrieb des entsprechenden Flugzeugs in den Längsversteifungselementen nur Zug- und Druckkräfte entlang ihrer Längsachsen auf, nicht aber Scherkräfte und Biegemomente, wohingegen in den Querversteifungselementen alle genannten Kräfte und Momente auftreten und von diesen übertragen werden. Demnach sind die eine Unterbrechung aufweisenden Längs- und Querversteifungselemente so mit dem Strukturelement verbunden, dass die genannten Kräfte und Momente zwischen den Abschnitten übertragen werden, wenn sie auftreten. Die Verbindung zwischen den beiden Abschnitten der entsprechenden Längs- und Querversteifungselemente und dem Strukturelement kann zum Beispiel durch Vernietung und zum Beispiel direkt oder über ein Zwischenelement, wie etwa einen Verbindungsbügel, erfolgen.

Alternativ oder bevorzugt zusätzlich zu dieser Verbindung zwischen den beiden Abschnitte von jedem der Längs- und Querversteifungselemente, das eine der Unterbrechungen aufweist, und dem Strukturelement ist außerdem auch die Außenhaut mit dem Strukturelement verbunden bzw. an diesem befestigt, und zwar in der Weise, bevorzugt starr, dass in der Außenhaut wirkende Scherkräfte durch das Strukturelement zwischen gegenüberliegenden Seiten der Öffnung übertragen werden. Dabei ist es bevorzugt, wenn die Außenhaut entlang des gesamten Umfangs der Öffnung mit dem Strukturelement in der beschriebenen Weise verbunden ist. Beispielsweise kann das Strukturelement einen ringförmigen Abschnitt aufweisen, der eine Ringöffnung umschließt, und die Außenhaut kann mit dem ringförmigen Abschnitt über dessen gesamten Umfang verbunden bzw. an diesem befestigt sein. Die Verbindung zwischen der Außenhaut und dem Strukturelement kann wieder zum Beispiel durch Vernietung und zum Beispiel direkt oder über ein Zwischenelement, wie etwa einen Verbindungsbügel, erfolgen.

Das Strukturelement ist demnach ein lasttragendes Element, das direkt in die Anordnung von Längs- und Querversteifungselementen oder die Außenhaut oder bevorzugt in die Anordnung von Längs- und Querversteifungselementen und die Außenhaut integriert ist, und es befindet sich kein separater Rahmen um das Strukturelement und die Öffnung, das das Strukturelement in Bezug auf eine oder mehrere der oben aufgeführten drei Kraftübertragungen mechanisch von der Anordnung von Längs- und Querversteifungselementen entkoppelt. Das Strukturelement ersetzt zumindest teilweise oder bevorzugt vollständig die durch die Unterbrechungen bzw. die Öffnung fehlenden lasttragenden Teile der Anordnung von Längs- und Querversteifungselementen und der Außenhaut.

Es ist darauf hinzuweisen, dass das Strukturelement mit mehreren Längs- und/oder Querversteifungselementen verbunden sein kann, so dass ein Teil der Kräfte, die auf den Abschnitt eines der entsprechenden Längs- oder Querversteifungselement, auf ein oder mehrere andere der Längs- bzw. Querversteifungselemente übertragen bzw. verteilt werden kann.

Ferner ist darauf hinzuweisen, dass es bevorzugt ist, dass das Strukturelement im in ein Flugzeug eingebauten Zustand den im Inneren des Flugzeugs herrschenden Innendruck aufnimmt und insbesondere die Öffnung druckdicht abschließt. Dies kann erfolgen, indem die oben beschriebene Verbindung zwischen dem Strukturelement und der Außenhaut geeignet ausgestaltet wird und insbesondere entlang des gesamten Umfangs der Öffnung vorgesehen ist. und indem das Strukturelement die Öffnung vom Inneren des Flugzeugs aus gesehen druckdicht abschließt. Alternativ ist es möglich, die Abdeckung als separaten druckdichten Verschluss der Öffnung vorzusehen, wobei dann höhere Anforderungen an die Lasttragekapazität der Abdeckung gestellt werden, oder einen separaten, von der Abdeckung verschiedenen druckdichten Verschluss der Öffnung vorzusehen.

Das Antennenelement ist im Bereich der Öffnung - d.h. vollständig oder zumindest teilweise unter der Öffnung, wenn man die Außenfläche des Strukturabschnitts als nach oben weisend definiert bzw. in der oben beschriebenen Weise senkrecht auf die Öffnung blickt - auf der der Außenfläche bzw. Außenseite gegenüberliegenden Seite der Außenhaut angeordnet. Mit anderen Worten befindet sich das Antennenelement im in ein Flugzeug eingebauten Zustand des Strukturabschnitts in Bezug auf die Außenhaut im Inneren des Flugzeugs.

Die beschriebene Antennenanordnung hat den Vorteil, dass keine schwere Grundplatte erforderlich ist, da keine Aerolasten auf das Antennenelement wirken, so dass die Antennenanordnung mit einem geringen Gewicht realisiert werden kann. Außerdem ist sie einfach zu installieren und zu warten. Da das Antennenelement nicht von dem Strukturabschnitt bzw. Flugzeug, wie zum Beispiel dem Flugzeugrumpf im Falle eines Rumpfstrukturabschnitts, nach außen vorsteht, wird außerdem der Luftwiderstand nicht ungünstig beeinflusst, und das Flugzeug kann ein besseres optisches Aussehen haben. Ferner ist es im Unterschied zu einer Einbettung eines Antennenelements als Schicht in die Außenhaut eines Flugzeugs in einfacher Weise möglich, das Antennenelement mechanisch von der Struktur zu entkoppeln und somit eine Beeinträchtigung der Antenneneigenschaften durch Wechselwirkung zwischen dem Antennenelement und Lasten oder Verformungen in der Struktur zu vermeiden oder zumindest zu verringern. Insgesamt ist es möglich, die Vorteile extern montierter Antennen, wie leichte Installation und Wartung, beizubehalten und dennoch deren Nachteile zu vermeiden, insbesondere einen hohen Luftwiderstand.

Erfindungsgemäß wird die Abdeckung durch das Strukturelement gebildet. Mit anderen Worten ist das Strukturelement die Abdeckung. Das Antennenelement kann dann in beliebiger Weise im Flugzeuginneren angeordnet und montiert sein, solange die von ihr im Betrieb abgestrahlten Funkwellen durch die Abdeckung aus dem Flugzeug gelangen und die gewünschte Abstrahlrichtung und der gewünschte Abstrahlwinkelbereich erzielt wird. Das Strukturelement ist in dieser Ausführungsform bevorzugt plattenförmig und kann zum Beispiel die Form einer ebenen oder bevorzugt einer gewölbten bzw. gekrümmten Platte haben. Das Strukturelement kann so mit den beiden Abschnitten der jeweiligen Längs- bzw. Querversteifungselemente verbunden sein, dass die Außenhaut zwischen dem Strukturelement und den Abschnitten angeordnet ist oder dass es direkt an den Abschnitten anliegt. Bei dieser Ausführungsform ist es möglich, dass das Strukturelement in der oben erwähnten Weise nur mit der Außenhaut verbunden ist, d.h. nicht mit den Längs- und Querversteifungselementen, oder dass das Strukturelement in der gleichfalls oben erwähnten Weise sowohl mit der Außenhaut als auch mit den Längs- und Querversteifungselementen verbunden ist. Letzteres kann zum Beispiel realisiert sein, indem die Abdeckung auf einem Randbereich der Außenhaut um die Öffnung anliegt und in diesem Bereich z.B. mittels einer Vernietung mit der Außenhaut verbunden ist, wobei die Vernietung so ausgebildet ist, dass sie direkt oder über Zwischenelemente auch die Verbindung zu den Längs- und Querversteifungselementen herstellt.

In Ausführungsformen, in denen die Abdeckung durch das Strukturelement gebildet wird, ist es ferner bevorzugt, wenn die beiden Abschnitte von jedem oder zumindest einigen der Längs- und Querversteifungselemente, das eine der Unterbrechungen aufweist, an ihren sich auf beiden Seiten der Unterbrechung gegenüberliegenden Endabschnitten auf der Seite, die in dieselbe Richtung wie die Außenfläche der Außenhaut weist, jeweils eine sich bis zu der Unterbrechung erstreckende Vertiefung, in der ein Abschnitt des Strukturelements angeordnet ist, oder eine sich bis zu der Unterbrechung erstreckende Verdickung aufweisen, mit dem ein Abschnitt des Strukturelements unmittelbar oder mittelbar über ein Zwischenelement verbunden ist. Durch die Vertiefungen oder Verdickungen weisen die beiden Abschnitte an ihren sich auf beiden Seiten der Unterbrechung gegenüberliegenden Enden einen Bereich veränderter Dicke auf, der zum Beispiel durch eine Stufe von dem Bereich normaler Dicke des jeweiligen Abschnitts getrennt ist. Wenn Vertiefungen vorgesehen sind, kann beispielsweise das Strukturelement insbesondere dann, wenn es plattenförmig ist, so angeordnet werden, dass es bündig oder im Wesentlichen bündig mit der Außenseite der Außenhaut ist, auch wenn das Strukturelement eine größere Dicke als die Außenhaut aufweist. Eine Verdickung kann demgegenüber zur Erzielung einer lokalen Verstärkung im Bereich des Randes der Öffnung vorgesehen werden.

In einer alternativen bevorzugten Ausführungsform, die nicht unter die Ansprüche fällt, sind das Strukturelement und die Abdeckung verschiedene Komponenten. In dieser Ausführungsform ist es bevorzugt, wenn zumindest ein Abschnitt des Strukturelements ringförmig einen Aufnahmeraum umgibt und das Antennenelement zumindest teilweise in dem Aufnahmeraum angeordnet ist. Beispielsweise kann das Strukturelement dazu in vorteilhafter Weise wannenförmig oder ringförmig sein, wobei der den Aufnahmeraum ringförmig umgebende Abschnitt zum Beispiel eine kreisförmige, runde, ovale, vieleckige rechteckige oder quadratische Form haben kann. Im Fall eines wannenförmigen Strukturelements wird der Aufnahmeraum durch das Wanneninnere gebildet, und im Fall eines ringförmigen Strukturelements durch das Ringinnere. Es ist aber auch möglich, ein ringförmiges Strukturelement vorzusehen und das Antennenelement außerhalb des Aufnahmeraums anzuordnen. Wie oben bereits erwähnt worden ist, muss im Fall eines insgesamt ringförmigen Strukturelements die Abdeckung oder eine separate Komponente den Innendruck im Flugzeug aufnehmen. Demgegenüber kann ein wannenförmiges Strukturelement selbst den Innendruck aufnehmen und die Öffnung in der Außenhaut verschließen.

In einer bevorzugten Ausführungsform ist das Antennenelement an dem Strukturelement montiert bzw. befestigt oder von diesem abgestützt. Dadurch kann die Antennenanordnung in besonders einfacher Weise als Einheit bereitgestellt und die Montage vereinfacht werden. Es ist aber auch möglich, dass das Antennenelement unabhängig von dem Strukturelement im Flugzeuginneren montiert ist.

In einer bevorzugten Ausführungsform ist das Antennenelement mechanisch von dem Strukturelement entkoppelt. Dies kann dadurch geschehen, dass geeignete Entkopplungsmechanismen zwischen dem Antennenelement und dem Strukturelement vorgesehen werden oder dass das Antennenelement nicht an dem Strukturelement montiert, befestigt oder von diesem abgestützt ist.

In einer bevorzugten Ausführungsform weist die Abdeckung - insbesondere, aber nicht nur, in Ausführungsformen, in denen das Strukturelement durch die Abdeckung gebildet wird - einen glas-, quarz-, keramik-oder aramidfaserverstärkten Verbundwerkstoff, beispielsweise in monolitischer oder Sandwichbauweise, auf. Derartige Materialen ermöglichen die Bereitstellung einer hohen Lasttragfähigkeit.

In einer bevorzugten Ausführungsform sind die beiden Abschnitte von jedem der Längs- und Querversteifungselemente, das eine der Unterbrechungen aufweist, an ihren sich auf beiden Seiten der Unterbrechung gegenüberliegenden Endabschnitten - d.h. insbesondere lokal im Vergleich zum Rest des jeweiligen Abschnitts - verstärkt. Dies kann beispielsweise in Form der bereits erwähnten Verdickung oder aber auch auf andere Weise, wie zum Beispiel durch modifizierte mechanische Eigenschaften geschehen. Auf diese Weise kann die Kraftübertragung zwischen den Abschnitten, mit deren Endabschnitten das Strukturelement verbunden ist, und dem Strukturelement verbessert werden.

In einer bevorzugten Ausführungsform weist die Antennenanordnung ferner einen oder mehrere mit dem Antennenelement elektrisch verbundenen Anschlüsse zur elektrischen Verbindung mit einer externen Einheit und/oder eine oder mehrere Kabeldurchführungsöffnungen auf. Die Einheit kann insbesondere Sende- und/oder Empfangselektronik aufweisen, die mit Hilfe des Antennenelements Funksingale sendet bzw. empfängt. Ist ein Anschluss vorgesehen, kann dieser - insbesondere in Ausführungsformen, in denen das Strukturelement und die Abdeckung separate Komponenten sind - zum Beispiel in vorteilhafter Weise an dem Strukturelement vorgesehen bzw. montiert sein. Unabhängig davon kann der Anschluss in vorteilhafter Weise ein Standard-Antennenanschluss bzw. die Kabeldurchführungsöffnung in vorteilhafter Weise eine Standard-Kabeldurchführungsöffnung sein, so dass unabhängig von der genauen Art des Antennenelements ein Standardinterface für den Anschluss an die Bordelektronik eines Flugzeugs bereitgestellt wird.

In einer bevorzugten Ausführungsform ist die Abdeckung plattenförmig und ist dann beispielsweise in Form einer ebenen oder bevorzugt einer gewölbten bzw. gekrümmten Platte ausgebildet. Alternativ oder zusätzlich ist es bevorzugt, wenn eine Außenseite der Abdeckung bündig oder im Wesentlichen bündig mit der Außenseite der Außenhaut ist. Auf diese Weise kann der Luftwiderstand minimiert werden.

In einer bevorzugten Ausführungsform ist das Antennenelement eine KU-, KA- oder L-Band Antenne. Durch die Ausgestaltung der erfindungsgemäßen Antennenanordnung ist es allgemein in vorteilhafter Weise leicht möglich, Antennenelemente unterschiedlicher Größeren und insbesondere auch relativ große Antennenelemente an bzw. in einem Flugzeug, wie zum Beispiel an bzw. in einem Flugzeugrumpf, vorzusehen.

Die Antennenanordnung nach einer der oben beschriebenen Ausführungsformen ist im eingebauten Zustand Teil eines Flugzeugs. Nach der vorliegenden Erfindung ist daher auch ein Flugzeug mit einer Struktur und einer Antennenanordnung nach einer der hierin beschriebenen Ausgestaltungen vorgesehen. Die Struktur weist eine Vielzahl von Längs- und Querversteifungselementen und eine Außenhaut auf. Der Strukturabschnitt ist ein Teil der Struktur, d.h. insbesondere sind die Längs- und Querversteifungselemente des Strukturabschnitts der Antennenanordnung Teil von Längs- und Querversteifungselementen der Struktur. Ist beispielsweise der Strukturabschnitt ein Rumpfstrukturabschnitt, weist das Flugzeug einen Rumpf und eine Antennenanordnung nach einer der hierin beschriebenen Ausgestaltungen auf. Der Rumpf weist dann eine Rumpfstruktur mit einer Vielzahl von Längs- und Querversteifungselementen und einer Außenhaut auf. Der Rumpfstrukturabschnitt ist ein Teil der Rumpfstruktur, d.h. insbesondere sind die Längs- und Querversteifungselemente des Rumpfstrukturabschnitts der Antennenanordnung Teil von Längs- und Querversteifungselementen des Rumpfes.

Das Flugzeug kann eine oder mehrere der Antennenanordnungen aufweisen. Dabei ist es von Vorteil, dass die Antennenanordnung an beliebiger Stelle im Flugzeug und zum Beispiel an beliebiger Stelle im Rumpf des Flugzeugs vorgesehen werden kann, zum Beispiel an der Oberseite, an der Unterseite oder seitlich. Gleiches gilt für eine Anordnung an bzw. in anderen Teilen des Flugzeugs, wie zum Beispiel einem Seitenleitwerk oder einer Tragfläche.

Nachfolgend wird die Erfindung unter Bezugnahme auf die Figuren näher erläutert, in denen zwei Ausführungsbeispiele dargestellt sind.
- Figur 1: zeigt eine schematische perspektivische Ansicht eines Flugzeugs mit einer erfindungsgemäßen Antennenanordnung,
- Figur 2a: zeigt eine schematische perspektivische Ansicht einer Oberseite einer Antennenanordnung gemäß einem ersten Ausführungsbeispiel der vorliegenden Erfindung,
- Figur 2b: zeigt eine schematische perspektivische Ansicht einer Unterseite der Antennenanordnung der Figur 2a,
- Figur 2c: zeigt eine schematische Querschnittsansicht eines Flugzeugrumpfes mit der Antennenanordnung der Figuren 2a und 2b,
- Figur 3a: zeigt eine schematische perspektivische Ansicht einer Antennenanordnung gemäß einem zweiten Ausführungsbeispiel, wobei die Außenhaut zur Illustration weggelassen worden ist,
- Figur 3b: zeigt eine schematische Querschnittsansicht der Antennenanordnung der Figur 3a,
- Figur 4a: zeigt eine schematische perspektivische Ansicht einer Unterseite einer Antennenanordnung gemäß einem dritten Ausführungsbeispiel, und
- Figur 4b: zeigt eine vergrößerte Ansicht eines Teils der Figur 4a.

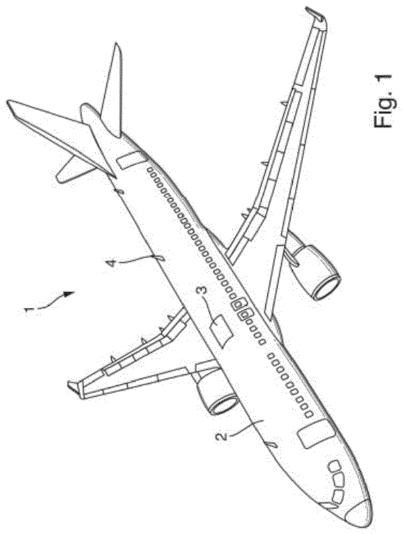

Das in Figur 1 gezeigte Flugzeug 1 weist einen Rumpf 2 und eine erfindungsgemäße Antennenanordnung 3 auf. Neben der Antennenanordnung 3 sind zu Illustrationszwecken auch noch konventionelle Blattantennen 4 gezeigt, die von außen an dem Rumpf 2 befestigt sind und nach außen von dem Rumpf 2 vorstehen. Demgegenüber ist die Oberseite der Antennenordnung 3 bündig oder im Wesentlichen bündig mit der Oberfläche des Rumpfes 2, so dass der Luftwiderstand des Rumpfes 2 durch die Antennenanordnung 3 nicht oder nicht wesentlich erhöht wird und keine oder im Wesentlichen keine erhöhten Aerolasten auf die Antennenanordnung wirken. In der Figur 1 ist die Antennenanordnung 3 beispielhaft an der Oberseite des Rumpfes 2 angeordnet. Die Antennenanordnung kann sich aber auch an beliebiger anderer Stelle des Rumpfes 2 befinden, zum Beispiel an einer Seite oder an der Unterseite. Der Rumpf 2 weist in üblicher Weise eine Rumpfstruktur mit einer gitterförmigen Anordnung von untereinander verbundenen Längs- und Querversteifungselementen auf, auf der eine Außenhaut angeordnet ist (für das Flugzeug in Figur 1 nicht separat gezeigt). Wie aus den weiteren Figuren ersichtlich ist, weist die Antennenanordnung 3 einen Rumpfstrukturabschnitt bzw. ein Rumpfstrukturelement 5 auf, der bzw. das Teil der Rumpfstruktur des Rumpfes 2 ist und einstückig mit der Rumpfstruktur des Rumpfes 2 ausgebildet oder als separate Komponente in diese integriert sein kann. Es ist darauf hinzuweisen, dass die Antennenanordnung 3 auch an anderen Stellen als dem Rumpf 2 vorgesehen werden kann, wie zum Beispiel dem Seitenleitwerk oder einer Tragfläche. Lediglich beispielhaft zeigen die Figuren die Anordnung am Rumpf 2. Bei einer Anordnung an anderer Stelle ist anstelle des Rumpfstrukturabschnitts 5 ein Strukturabschnitt der entsprechenden Teilstruktur des Flugzeugs vorgesehen, wie zum Beispiel ein Seitenleitwerkstrukturabschnitt oder ein Tragflächenstrukturabschnitt.

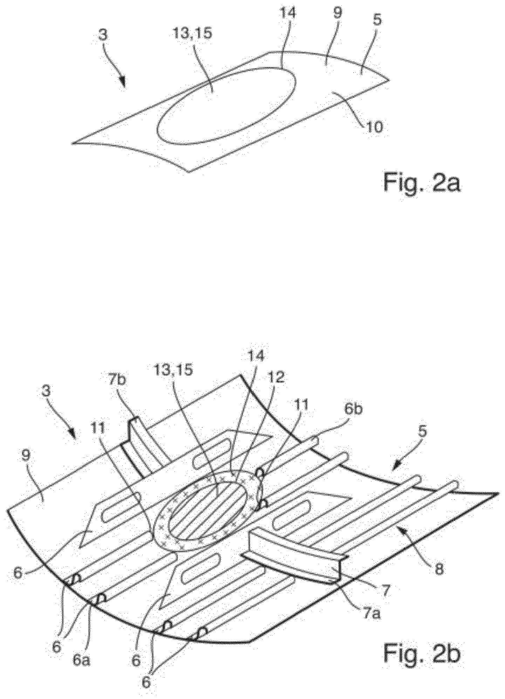

Die Figuren 2a bis 2c zeigen ein erstes Ausführungsbeispiel der Antennenanordnung 3. Die Antennenanordnung 3 weist ein Rumpfstrukturelement 5 auf, dessen Aufbau genauer aus der Figur 2b ersichtlich ist. Zum einen weist das Rumpfstrukturelement 5 eine Vielzahl von Längsversteifungselementen 6 und ein Querversteifungselement 7 auf, die untereinander verbunden sind und zusammen eine Anordnung 8 von Längs- und Querversteifungselementen 6, 7 bilden. Die Längsversteifungselemente 6 erstrecken sich im in den Rumpf 2 eingebauten Zustand in Längsrichtung des Rumpfes 2, und das Querversteifungselement 7 erstreckt sich in Umfangsrichtung des Rumpfes 2 senkrecht zu den Längsversteifungselementen 6. Zum anderen weist das Rumpfstrukturelement 5 eine Außenhaut 9 auf, die auf einer Seite der Anordnung 8 angeordnet und an dieser befestigt ist. Eine Außenfläche 10 der Außenhaut 9 bildet im in den Rumpf 2 eingebauten Zustand einen Teil der Außenfläche bzw. der Außenseite des Rumpfes 2. Die Anordnung 8 befindet sich auf der der Außenfläche 10 gegenüberliegenden Seite der Außenhaut 9.

Sowohl in dem Querversteifungselement 7 als auch in zwei von den Längsversteifungselementen 6 ist jeweils eine Unterbrechung 11 vorgesehen, die das jeweilige Längs- bzw. Querversteifungselement 6, 7 in zwei jeweilige Abschnitte 6a, 6b bzw. 7a, 7b auf beiden Seiten der Unterbrechung 11 unterteilen. Alle drei Unterbrechungen 11 zusammen definieren eine zusammenhängende Unterbrechung in der Anordnung 8, und in dieser zusammenhängenden Unterbrechung ist eine Öffnung 12 in der Außenhaut 9 ausgebildet (siehe Figur 2b). Diese Öffnung 12 ist durch eine Abdeckung 13 druckdicht verschlossen, die in Form einer gekrümmten Platte ausgebildet und auf der Seite der Außenfläche 10 auf der Außenhaut 9 angeordnet ist und die Öffnung 12 vollständig überdeckt. Dabei erstreckt sich ein umlaufender Randbereich 14 der Abdeckung 13 über den gesamten Umfang der Öffnung 12 über diese hinaus, so dass sie mit einem Teil der an die Öffnung 12 angrenzenden Außenhaut 9 überlappt. In diesem Randbereich 14 ist die Abdeckung 13 an der Außenhaut 9 und durch diese bzw. über diese an den gegenüberliegenden Abschnitten 6a, 6b bzw. 7a, 7b der unterbrochenen Längs- bzw. Querversteifungselemente 6, 7 befestigt. Es ist aber auch möglich, dass die Abdeckung 13 nur an der Außenhaut 9 befestigt ist.

Die Abdeckung 13 der Antennenanordnung 3 stellt in diesem Ausführungsbeispiel gleichzeitig ein lasttragendes bzw. lastübertragendes Strukturelement 15 dar, durch das entlang der Längs- bzw. Querversteifungselemente 6, 7 wirkende Längskräfte, quer zu den Längs- bzw. Querversteifungselementen 6, 7 wirkende Quer- bzw. Scherkräfte und um die Längsrichtung der Längs- bzw. Querversteifungselemente 6, 7 wirkende Torsionskräfte zwischen den Abschnitten 6a, 6b und 7a, 7b der unterbrochenen Längs- und Querversteifungselemente 6, 7 übertragen werden. Auf diese Weise kann eine Schwächung der Rumpfstruktur im Bereich der Antennenanordnung 3 vermieden oder zumindest gering gehalten werden.

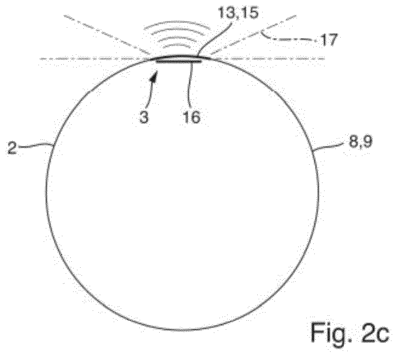

Schließlich weist die Antennenanordnung 3 ein Antennenelement 16 auf (siehe Figur 2c), das auf der der Außenfläche 10 der Außenhaut 9 gegenüberliegenden Seite der Außenhaut 9 angeordnet ist und sich daher im in den Rumpf 2 eingebauten bzw. integrierten Zustand im Inneren des Rumpfes 2 des Flugzeugs 1 befindet. Die Anordnung des Antennenelements 16 im Inneren des Rumpfes 2 ist dabei im Wesentlichen beliebig, solange die von dem Antennenelement 16 abgestrahlten und zu empfangenen Funkwellen mit dem gewünschten Abstrahlwinkelbereich 17 durch die Öffnung 12 und die Abdeckung 13, 15 gelangen können. Die Abdeckung 13, 15, die selbst als lasttragendes Strukturelement 15 ausgebildet ist, ist für die Funkwellen durchlässig und kann beispielsweise aus einem glas- oder quarzfaserverstärktem Verbundwerkstoff bestehen oder diesen aufweisen. Das Antennenelement 16 kann unabhängig von dem Rumpfstrukturabschnitt 5 und der Rumpfstruktur des Rumpfes 2 in dem Flugzeuginneren montiert sein, so dass es von Lasten und Verformungen der Rumpfstruktur und des Rumpfstrukturabschnitts 5 mechanisch entkoppelt sein kann.

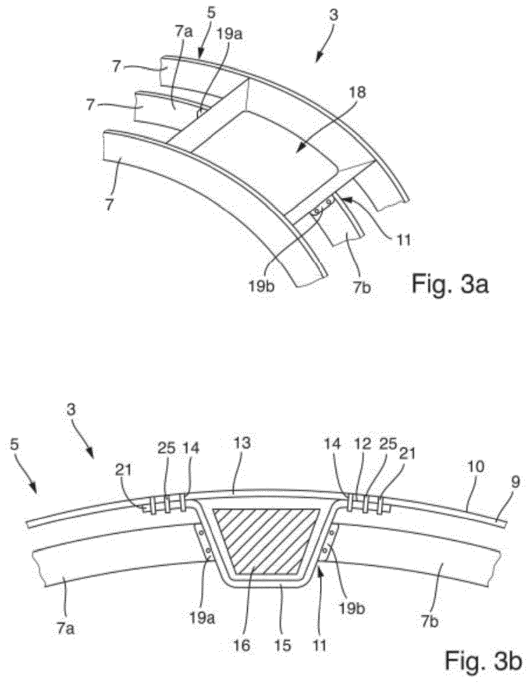

Die Figuren 3a und 3b zeigen ein zweites Ausführungsbeispiel der Antennenanordnung 3, das nicht unter die Ansprüche fällt und in dem im Unterschied zu den Figuren 2a bis 2c die Abdeckung 13 und das Strukturelement 15 separate Elemente bzw. Komponenten sind. Das Strukturelement 15 ist dabei wannenförmig ausgebildet, so dass es einen Aufnahmeraum 18 definiert. Auch die Antennenanordnung 3 der Figuren 3a und 3b weist ein Rumpfstrukturelement 5 auf, dessen Aufbau dem der Figuren 2a bis 2c entspricht, so dass auf die obigen Erläuterungen verwiesen wird. In den Figuren 3a und 3b ist dabei lediglich eine Anzahl von drei Querversteifungselementen 7 gezeigt, von denen eines eine Unterbrechung 11 aufweist. In dieser Unterbrechung 11 ist die Öffnung 12 in der Außenhaut 9 ausgebildet (siehe Figur 3b), und die Öffnung 12 ist wieder durch eine Abdeckung 13 verschlossen, die in Form einer gekrümmten Haut ausgebildet und in ihrem Randbereich 14 umlaufend an dem Strukturelement 15 befestigt ist.

Im Unterschied zu dem Ausführungsbeispiel der Figuren 2a bis 2c ist die Abdeckung 13 aber nicht lasttragend ausgebildet bzw. muss nicht lasttragend ausgebildet sein. Zum Zwecke der Übertragung von entlang des unterbrochenen Querversteifungselements 7 wirkenden Längskräften, quer zu diesem Querversteifungselement 7 wirkenden Quer- bzw. Scherkräften und in dem Querversteifungselement 7 wirkenden Biegemomenten zwischen den Abschnitten 7a, 7b dieses Querversteifungselements 7 sowie zur Übertragung von in der Außenhaut 9 wirkenden Scherkräften zwischen gegenüberliegenden Seiten der Öffnung 12 ist vielmehr das Strukturelement 15 vorgesehen und angepasst, das unmittelbar starr mit Enden 19a, 19b der beiden Abschnitte 7a, 7b des unterbrochenen Querversteifungselements 7 und um den gesamten Umfang der Wannenöffnung herum mit der Außenhaut 9 verbunden ist. Die Kraft- und Momentenübertragung zwischen den Abschnitten 7a, 7b und die Kraftübertragung zwischen Abschnitten der Außenhaut 9 auf gegenüberliegenden Seiten der Öffnung 12 erfolgt demnach über das Strukturelement 15 unabhängig von der Abdeckung 13.

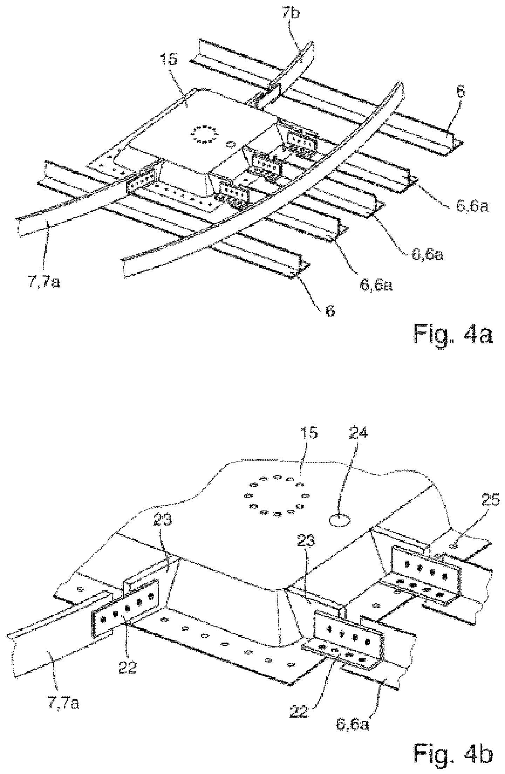

Das Strukturelement 15 weist an seinem oberen Rand einen umgebogenen, umlaufenden Flanschabschnitt 21 auf, mit dem es von unten an einem unmittelbar an die Öffnung 12 angrenzenden umlaufenden Randbereich der Außenhaut 9 anliegt und an dem die Außenhaut befestigt ist, zum Beispiel durch Nietverbindungen 25, wie sie in den Figuren 3b und 4b gezeigt sind. Dadurch ist es möglich, dass die Abdeckung 13, die in diesem Beispiel mit ihrem Randbereich 14 an dem Flanschabschnitt 21 befestigt ist, bündig oder im Wesentlichen bündig mit der Außenfläche 10 der Außenhaut 9 ist.

In dem Aufnahmeraum 18 des Strukturelements 15 ist das Antennenelement 16 angeordnet, das sich somit in Bezug auf die Außenhaut 9 im in ein Flugzeug 1 eingebauten Zustand im Inneren des Rumpfes 2 des Flugzeugs 1 befindet.

Die Öffnung 12 wird durch das Strukturelement 15 druckdicht von innen verschlossen, so dass das Strukturelement 15 den im Inneren des Flugzeugs herrschenden Innendruck aufnimmt. Demgegenüber dient der Verschluss der Öffnung durch die Abdeckung 13 in diesem Ausführungsbeispiel nur dazu, eine möglichst glatte Außenfläche der Antennenanordnung bzw. Oberfläche des Flugzeugs zu gewährleisten.

Die Figuren 4a und 4b zeigen in einer schematischen perspektivischen Ansicht von unten ein drittes Ausführungsbeispiel der Antennenanordnung 3, die weitestgehend dem zweiten Ausführungsbeispiel der Figuren 3a und 3b gleicht und nicht unter die Ansprüche fällt. Der einzige Unterschied besteht darin, dass auch mehrere Längsversteifungselement 6 eine Unterbrechung 11 aufweisen und dass die Abschnitte 6a, 6b und 7a, 7b der unterbrochenen Längs- und Querversteifungselemente 6, 7 jeweils über ein starres Verbindungsstück 22 mit Ansätzen 23 an dem Strukturelement 15 verbunden sind.

In den Figuren 4a und 4b ist auch zu sehen, dass im Boden des wannenförmigen Strukturelements 15 eine Kabeldurchführungsöffnung 24 vorgesehen ist, durch die ein Kabel zum Anschluss einer Sende- und/oder Empfangselektronik an das Antennenelement 16 hindurchgeführt werden kann.

## Patentansprüche

1. Antennenanordnung für ein Flugzeug (1), die
- einen Strukturabschnitt (5) einer Struktur eines Flugzeugs (1), der
- eine Anordnung von untereinander verbundenen länglichen Längs- und Querversteifungselementen (6, 7) und
- eine Außenhaut (9) aufweist, die auf einer Seite der Anordnung (8) von Längs- und Querversteifungselementen (6, 7) angeordnet und an den Längs- und Querversteifungselementen (6, 7) befestigt ist, wobei eine von diesen abgewandte Fläche der Außenhaut (9) eine Außenfläche des Strukturabschnitts (5) bildet,
- ein Antennenelement (16) und
- ein Strukturelement (15) aufweist,
wobei in der Außenhaut (9) eine Öffnung (12) ausgebildet ist, und im Bereich der Öffnung (12) mindestens eines der Längsversteifungselemente (6) und/oder mindestens eines der Querversteifungselemente (7) eine Unterbrechung (11) aufweist, in der das Strukturelement (15) angeordnet ist und die das jeweilige Längs- bzw. Querversteifungselement (6, 7) in zwei Abschnitte (6a, 6b; 7a, 7b) auf gegenüberliegenden Seiten der Unterbrechung (11) unterteilt,
wobei die beiden Abschnitte (6a, 6b; 7a, 7b) in der Weise mit dem Strukturelement (15) verbunden sind, dass in Längsrichtung des jeweiligen Längs- bzw. Querversteifungselements (6, 7) wirkende Zug- und Druckkräfte, in Querrichtung wirkende Scherkräfte und um die Längsachse wirkende Torsionskräfte durch das Strukturelement (15) zwischen den beiden Abschnitten (6a, 6b; 7a, 7b) übertragen werden, und/oder wobei die Außenhaut (9) in der Weise mit dem Strukturelement (15) verbunden ist, dass in der Außenhaut (9) wirkende Scherkräfte durch das Strukturelement (15) zwischen gegenüberliegenden Seiten der Öffnung (12) übertragen werden, und
wobei das Antennenelement (16) im Bereich der Öffnung (12) auf der der Außenfläche gegenüberliegenden Seite der Außenhaut (9) angeordnet ist,
**dadurch gekennzeichnet,**
**dass** die Antennenanordnung eine für Funkwellen durchlässige Abdeckung (13) aufweist, wobei die Öffnung (12) von der Abdeckung (13) verschlossen wird und wobei die Abdeckung (13) durch das Strukturelement (15) gebildet wird.

2. Antennenanordnung nach Anspruch 1, bei der das Strukturelement (15) plattenförmig ist.

3. Antennenanordnung nach Anspruch 1 oder Anspruch 2, bei der die beiden Abschnitte (6a, 6b; 7a, 7b) von jedem der Längs- und Querversteifungselemente (6, 7), das eine der Unterbrechungen (11) aufweist, an ihren sich auf beiden Seiten der Unterbrechung (11) gegenüberliegenden Endabschnitten auf der der Außenfläche zugewandten Seite jeweils eine sich bis zu der Unterbrechung (11) erstreckende Vertiefung, in der ein Abschnitt des Strukturelements (15) angeordnet ist, oder eine sich bis zu der Unterbrechung (11) erstreckende Verdickung aufweisen, mit dem ein Abschnitt des Strukturelements (15) verbunden ist.

4. Antennenanordnung nach einem der vorhergehenden Ansprüche, bei der das Antennenelement (16) an dem Strukturelement (15) montiert ist.

5. Antennenanordnung nach einem der Ansprüche 1 bis 4, bei der das Antennenelement (16) mechanisch von dem Strukturelement (15) entkoppelt ist.

6. Antennenanordnung nach einem der vorhergehenden Ansprüche, bei der die Abdeckung (13) einen glas-, quarz-, keramik-oder aramidfaserverstärkten Verbundwerkstoff aufweist.

7. Antennenanordnung nach einem der vorhergehenden Ansprüche, bei der die beiden Abschnitte (6a, 6b; 7a, 7b) von jedem der Längs- und Querversteifungselemente (6, 7), das eine der Unterbrechungen (11) aufweist, an ihren sich auf beiden Seiten der Unterbrechung (11) gegenüberliegenden Endabschnitten verstärkt sind.

8. Antennenanordnung nach einem der vorhergehenden Ansprüche, die ferner mindestens einen mit dem Antennenelement (16) elektrisch verbundenen Anschluss zur elektrischen Verbindung mit einer externen Einheit und/oder mindestens eine Kabeldurchführungsöffnung (24) aufweist.

9. Antennenanordnung nach einem der vorhergehenden Ansprüche, bei der die Abdeckung (13) plattenförmig ist und/oder bei der eine Außenfläche der Abdeckung (13) bündig mit der Außenfläche (10) der Außenhaut (9) ist.

10. Antennenanordnung nach einem der vorhergehenden Ansprüche, bei der das Antennenelement (16) eine KU-, KA- oder L-Band Antenne ist.

11. Flugzeug mit einer Struktur und einer Antennenanordnung (3) nach einem der vorhergehenden Ansprüche, wobei die Struktur eine Vielzahl von Längs- und Querversteifungselementen (6, 7) und eine Außenhaut (9) aufweist und wobei der Strukturabschnitt (5) ein Teil der Struktur ist.

## Claims

1. An antenna arrangement for an aircraft (1), which comprises
- a structural section (5) of a structure of an aircraft (1), the structural section comprising
- an arrangement of interconnected elongated longitudinal and transverse stiffening elements (6, 7) and
- an outer skin (9) arranged on one side of the arrangement (8) of longitudinal and transverse stiffening elements (6, 7) and fixed to the longitudinal and transverse stiffening elements (6, 7), a surface of the outer skin (9) facing away from the latter forming an outer surface of the structural section (5),
- an antenna element (16) and
- a structural element (15),
wherein an opening (12) is formed in the outer skin (9), and in the region of the opening (12) at least one of the longitudinal stiffening elements (6) and/or at least one of the transverse stiffening elements (7) has an interruption (11) in which the structural element (15) is arranged and which divides the respective longitudinal or transverse stiffening element (6, 7) into two sections (6a, 6b; 7a, 7b) on opposite sides of the interruption (11),
wherein the two sections (6a, 6b; 7a, 7b) are connected to the structural element (15) in such a way that tensile and compressive forces acting in the longitudinal direction of the respective longitudinal or transverse stiffening element (6, 7), shear forces acting in transverse direction and torsion forces acting around the longitudinal axis are transmitted between the two sections (6a, 6b; 7a, 7b) through the structural element (15), and/or the outer skin (9) being connected to the structural element (15) in such a way that shear forces acting in the outer skin (9) are transmitted through the structural element (15) between opposite sides of the opening (12), and
wherein the antenna element (16) is located in the area of the opening (12) on the outer surface is arranged on the opposite side of the outer skin (9),
**characterized in that** the antenna arrangement has a cover (13) which is transparent to radio waves, wherein the opening (12) is closed by the cover (13) and wherein the cover (13) is formed by the structural element (15).

2. An antenna arrangement according to claim 1, in which the structural element (15) is plate-shaped.

3. An antenna arrangement according to claim 1 or claim 2, in which the two sections (6a, 6b; 7a, 7b) of each of the longitudinal and transverse stiffening elements (6, 7), which comprises one of the interruptions (11), have at their end sections facing each other on either side of the interruption (11)on the side facing the outer surface each a recess extending to the interruption (11), in which a section of the structural element (15) is arranged, or have a thickening extending up to the interruption (11) to which a section of the structural element (15) is connected.

4. An antenna arrangement according to one of the preceding claims, in which the antenna element (16) is mounted on the structural element (15).

5. An antenna arrangement according to one of the claims 1 to 4, in which the antenna element (16) is mechanically decoupled from the structural element (15).

6. An antenna arrangement according to one of the preceding claims, in which the cover (13) comprises a glass, quartz, ceramic or aramid fibre reinforced composite material.

7. An antenna arrangement according to one of the preceding claims, in which the two sections (6a, 6b; 7a, 7b) of each of the longitudinal and transverse stiffening elements (6, 7) comprising one of the interruptions (11) are reinforced at their end portions opposing each other on either side of the interruption (11).

8. An antenna arrangement according to one of the preceding claims, which further comprises at least one electrically connected connection to the antenna element (16) for electrical connection to an external unit and/or at least one cable feed-through opening (24).

9. An antenna arrangement according to one of the preceding claims, in which the cover (13) is plate-shaped and/or in which an outer surface of the cover (13) is flush with the outer surface (10) of the outer skin (9).

10. An antenna arrangement according to one of the preceding claims, in which the antenna element (16) is a KU, KA or L-band antenna.

11. An aircraft having a structure and an antenna arrangement (3) according to one of the preceding claims, wherein the structure comprises a plurality of longitudinal and transverse stiffening elements (6, 7) and an outer skin (9), and wherein the structure portion (5) is a part of the structure.

## Revendications

1. Un arrangement d'antenne pour un avion (1), qui comprend
- une section structurelle (5) d'une structure d'un aéronef (1), la section structurelle comprenant
- un ensemble d'éléments de renforcement longitudinaux et transversaux allongés interconnectés (6, 7) et
- une peau extérieure (9) disposée sur un côté de l'agencement (8) d'éléments de raidissement longitudinaux et transversaux (6, 7) et fixée aux éléments de raidissement longitudinaux et transversaux (6, 7), une surface de la peau extérieure (9) opposée à ces derniers formant une surface extérieure de la section structurelle (5),
- un élément d'antenne (16) et
- un élément structurel (15),
dans lequel une ouverture (12) est formée dans la peau extérieure (9), et dans la zone de l'ouverture (12), au moins l'un des éléments de renforcement longitudinaux (6) et/ou au moins l'un des éléments de renforcement transversaux (7) présente une interruption (11) dans laquelle est disposé l'élément de construction (15) et qui divise l'élément de renforcement longitudinal ou transversal respectif (6, 7) en deux sections (6a, 6b ; 7a, 7b) sur des côtés opposés de l'interruption (11),
les deux sections (6a, 6b ; 7a, 7b) étant reliées à l'élément de structure (15) de telle sorte que les forces de traction et de compression agissant dans la direction longitudinale de l'élément de renforcement longitudinal ou transversal respectif (6, 7), les forces de cisaillement agissant dans la direction transversale et les forces de torsion agissant autour de l'axe longitudinal sont transmises entre les deux sections (6a, 6b) ; 7a, 7b) à travers l'élément de structure (15), et/ou la peau extérieure (9) étant reliée à l'élément de structure (15) de telle manière que les forces de cisaillement agissant dans la peau extérieure (9) sont transmises à travers l'élément de structure (15) entre les côtés opposés de l'ouverture (12), et
dans lequel l'élément d'antenne (16) est situé dans la zone de l'ouverture (12) sur la surface extérieure est disposé sur le côté opposé de la peau extérieure (9), **caractérisé en ce que** l'agencement d'antenne comporte un couvercle (13) qui est transparent aux ondes radio, l'ouverture (12) étant fermée par le couvercle (13) et le couvercle (13) étant formé par l'élément structurel (15).

2. Un arrangement d'antenne selon la revendication 1, dans lequel l'élément structurel (15) est en forme de plaque.

3. Une arrangement d'antenne selon la revendication 1 ou la revendication 2, dans lequel les deux sections (6a, 6b ; 7a, 7b) de chacun des éléments de renforcement longitudinaux et transversaux (6, 7), qui comprend l'une des interruptions (11), présentent à leurs sections d'extrémité se faisant face de part et d'autre de l'interruption (11)du côté de la surface extérieure un évidement s'étendant jusqu'à l'interruption (11), dans lequel une section de l'élément de structure (15) est disposée, ou présentent un épaississement s'étendant jusqu'à l'interruption (11) auquel une section de l'élément de structure (15) est reliée.

4. Une arrangement d'antenne selon l'une des revendications précédentes, dans lequel l'élément d'antenne (16) est monté sur l'élément structurel (15).

5. Un arrangement d'antenne selon l'une des revendications 1 à 4, dans lequel l'élément d'antenne (16) est découplé mécaniquement de l'élément structurel (15).

6. Une arrangement d'antenne selon l'une des revendications précédentes, dans lequel le couvercle (13) comprend un matériau composite renforcé par des fibres de verre, de quartz, de céramique ou d'aramide.

7. Un arrangement d'antenne selon l'une des revendications précédentes, dans lequel les deux sections (6a, 6b ; 7a, 7b) de chacun des éléments de renforcement longitudinaux et transversaux (6, 7) comprenant l'une des interruptions (11) sont renforcées à leurs parties d'extrémité opposées de chaque côté de l'interruption (11).

8. Un arrangement d'antenne selon l'une des revendications précédentes, qui comprend en outre au moins une connexion électriquement connectée à l'élément d'antenne (16) pour la connexion électrique à une unité externe et/ou au moins une ouverture de passage de câble (24).

9. Un arrangement d'antenne selon l'une des revendications précédentes, dans lequel le couvercle (13) est en forme de plaque et/ou dans lequel une surface extérieure du couvercle (13) est à fleur de la surface extérieure (10) de la peau extérieure (9).

10. Une arrangement d'antenne selon l'une des revendications précédentes, dans lequel l'élément d'antenne (16) est une antenne en bande KU, KA ou L.

11. Un aéronef ayant une structure et un agencement d'antenne (3) selon l'une des revendications précédentes, dans lequel la structure comprend une pluralité d'éléments de raidissement longitudinaux et transversaux (6, 7) et un revêtement extérieur (9), et dans lequel la partie de structure (5) est une partie de la structure.
